# EUROPÄISCHE PATENTSCHRIFT

(11) **EP 1 335 198 B1**
(45) Veröffentlichungstag und Bekanntmachung des Hinweises auf die Patenterteilung: **03.03.2004**
(21) Anmeldenummer: 02002437.8
(22) Anmeldetag: 01.02.2002
(51) Int. Cl.: G01N 15/10, G01N 33/487, B03C 5/00

(54) **Mikrofluidisches Bauelement und Verfahren für die Sortierung von Partikeln in einem Fluid**
Microfluidic component and procedure for sorting particles in a fluid
Composant microfluidique et procédure pour le triage de particules dans un fluide

(43) Veröffentlichungstag der Anmeldung: 13.08.2003
(73) Patentinhaber: Leister Process Technologies, 6060 Sarnen (CH)
(72) Erfinder: Gawad, Shady, 1110 Morges (CH); Wüthrich, Martin, 2000 Neuchâtel (CH); Renaud, Philippe, 1028 Préverenges (CH)
(74) Vertreter: Klocke, Peter, Dipl.-Ing.

(56) Entgegenhaltungen:
- WO-A-00/00293
- WO-A-00/17630
- US-A- 6 136 171
- FUHR G ET AL: "RADIO-FREQUENCY MICROTOOLS FOR PARTICLE AND LIVE CELL MANIPULATION" NATURWISSENSCHAFTEN, BERLIN, DE, Bd. 81, 1994, Seiten 528-535, XP000826650

## Beschreibung

Die vorliegende Erfindung betrifft ein mikrofluidisches Bauelement aus einem Substrat mit einem Kanal zum Durchführen individueller Partikel zum Sortieren von Partikel in einem Fluidstrom, insbesondere Flüssigkeitsstrom sowie ein Verfahren zum Sortieren von Partikeln.

Die Manipulierung suspendierter Teilchen ist allgemein bekannt und wird beispielsweise von G. Fuhr et al in "Naturwissenschaften" Band 81, 1994, Seite 528 ff, beschrieben. Bei den suspendierten Teilchen kann es sich dabei um beliebige Partikel oder auch biologische Zellen handeln. Im Nachfolgenden wird daher allgemein nur von Partikel gesprochen. Die Mikrosysteme bilden insbesondere Kanalstrukturen, die von einer Suspensionsflüssigkeit mit den zu manipulierenden Partikeln beströmt werden. In den Kanalstrukturen sind auf den Kanalwänden Mikroelektroden angebracht, die mit hochfrequenten elektrischen Feldern beaufschlagt werden. Unter der Wirkung der hochfrequenten elektrischen Felder zwischen zwei Elektroden werden in den suspendierten Partikeln auf der Basis negativer oder positiver Dielektrophorese Polarisationskräfte erzeugt, die eine Abstoßung oder Anziehung von den Elektroden und in Zusammenwirkung mit Strömungskräften in der Suspensionsflüssigkeit eine Manipulierung der Teilchen im Kanal erlauben. Derartige Elektroden sind beispielsweise in der WO 00 00 293 beschrieben.

In S. Gawad et al, "1^{st} Annual International IEEE-EMBS Special Topic Conference on Microtechnologies in Medicine & Biology October 12-14, 2000, Lyon. FRANCE" Seiten 1 bis 5 sowie aus S. Gawad et al "Lab on a Chip", 2001, 1, Seite 76 bis 82 ist bekannt, Zellen in einem Mikrokanal mittels der Impedanzspektroskopie zu analysieren. Hierbei werden in dem Kanal eingebettete Elektroden verwendet, so dass mindestens zwei Feldbereiche entstehen, in denen eine Impedanzmessung durchgeführt wird. Die Auswertung erfolgt dann durch eine Differenzmessung, beispielsweise mittels einer Messbrücke. Hinsichtlich weiterer Details wird auf diese Veröffentlichungen sowie die darin angegebenen Erläuterungen zu dem Messprinzip sowie zum Stand der Technik verwiesen.

Die Ergebnisse einer derartigen Analyse können dann verwendet werden, um im Anschluss daran eine Zellsortierung durchzuführen. Hier ist es ebenfalls bekannt, eine auf Dielektrophorese basierende Zellsortierung durchzuführen. So ist beispielsweise aus der US 4 326 934 bekannt, mittels Dielektrophorese Schwefel aus Öl zu extrahieren.

Aus der US 5 489 506 ist ein Verfahren und eine Vorrichtung zum kontinuierlichen Aussortieren lebender Zellen aus einer Mischung bekannt, bei der die an einer oder mehreren Elektroden vorbeikommenden Zellen entsprechend ihrer Größe, physikalischer Konstruktion, chemischen Zusammensetzung und elektronischen Eigenschaften aussortiert werden, wobei die Elektroden an Radiofrequenzgeneratoren angeschlossen sind.

Bei den vorstehend beschriebenen Verfahren werden die unterschiedlichen elektrophoretischen Eigenschaften der Partikel genutzt, um diese aus dem Fluidstrom auszuleiten. Es handelt sich hierbei um eine passive Sortierung, da eine gezielte Entscheidung, ob der Partikel ausgeleitet werden soll oder nicht, nicht getroffen werden kann.

Aus der WO 00/17630 A1 ist ein Detektor bekannt, der zur Analyse von Partikeln in Mikrokanälen eine Impedanzmessung durchführt. Dabei wird die Partikelposition in dem Kanal nicht berücksichtigt, wobei die Partikel mit wenig Bewegung zwischen den Elektroden gemessen werden. Damit ist dieses Verfahren in der dort dargestellten Ausführung nicht geeignet, um eine Vielzahl. von Partikel/Zellen pro Sekunde zu detektieren noch sind reproduzierbare Messungen möglich, wenn die Partikelposition in dem Kanal nicht kontrolliert wird. Dort wird der Partikel zum Vermessen gezielt eingebracht.

Die bisher bekannten Einrichtungen zur Charakterisierung von Partikeln, insbesondere biologischen Zellen, Sortierung und Zählung (Zytometer) zeichnen sich durch sehr aufwendige Einrichtungen aus, die in der Regel aus einer optischen Analyseeinrichtung basierend auf FACS (Fluorescence-activated cell sorting) oder aus einer Kombination von optischen und elektrischen Messeinrichtungen bestehen. Eine rein elektrische Erkennung und Sortierung wird nicht durchgeführt. Daher ist bei diesen Einrichtungen eine zusätzliche Präparation der Partikel für die optische Analyse erforderlich. Dies macht die Analyse mittels derartiger Einrichtungen aufwendig und zeitintensiv.

Der vorliegenden Erfindung liegt daher die Aufgabe zugrunde, ein elektrisches Durchflusszytometer vorzuschlagen, das auf einem Substrat in Mikro- bzw. Nanotechnologie die Identifizierung sowie Zählung und Sortierung möglichst schnell und genau ermöglicht.

Diese Aufgabe wird erfindungsgemäß durch ein mikrofluidisches Bauelement aus einem Substrat gemäß Anspruch 1 sowie einem Verfahren gemäß Anspruch 16 gelöst. Weiterer vorteilhafter Ausgestaltungen sind den Unteransprüchen zu entnehmen.

Die Grundidee der Erfindung besteht darin, auf einem Trägermaterial im nachfolgenden Substrat genannt, in mindestens einem länglichen Kanal, durch die die individuellen Partikel in einem Fluid hindurchgeführt werden, diese zuerst in einem ersten Bereich in dem Fluidstrom für die nachfolgende Messung in einem zweiten Messkanalbereich vorzubereiten und anschließend nach dem Verlassen des Messkanalbereichs aufgrund der erfassten Eigenschaften der Partikel diese in einem dritten Bereich, dem Sortierbereich, zu trennen. Dabei kann die Trennung selbstverständlich in mehr als nur zwei verschiedene Arten vorgenommen werden. Demzufolge umfasst der Kanal einen Vorbereitungsbereich mit ersten Elektrodeneinrichtungen zur gezielten Beeinflussung und Vereinzelung der Partikel, vorzugsweise mittels Dielektrophorese. Daran schließt sich der Messkanalbereich mit zweiten Elektrodeneinrichtungen zur Charakterisierung der Partikel an. Dann folgt der Sortierbereich mit dritten Elektrodeneinrichtungen zum Sortieren der in dem Messkanalbereich identifizierten Partikel mittels Dielektrophorese. Auf dem Substrat befinden sich selbstverständlich außerdem Leiterbahnen, die elektrisch mit den jeweiligen Elektroden verbunden sind, um Signale zu den Elektroden bzw. von den Elektroden weg zu übertragen. Hierzu ist das Bauelement an entsprechenden Mess- und Steuereinrichtungen anzuschließen, die nicht Gegenstand der Erfindung sind.

Die Querschnitte der einzelnen Bereiche variieren dabei in der Art, dass der Querschnitt des Kanals (Messkanal) in dem Messkanalbereich wesentlich geringer ist als der Querschnitt im Vorbereitungs- und im Sortierbereich.

Die im Zusammenhang mit Dielektrophorese verwendeten Elektrodenanordnungen bestehen immer aus einem Paar gleicher Elektroden, die in der Regel am Rand seitlich oder oben und unten an den Kanalwänden angebracht sind, so dass sich in den übereinstimmenden Bereichen zwischen den einzelnen Elektroden ein elektrisches Feld aufbauen kann, das die Partikel zu den gewünschten Bewegungen veranlasst. Im Nachfolgenden werden daher die Begriffe Elektroden oder Elektrodenpaar als Synonyme verwendet.

Damit überhaupt eine Charakterisierung und anschließende Sortierung möglich ist, ist es erforderlich, in dem Vorbereitungsbereich die Partikel, die möglicherweise in Haufen (Cluster) zusammenhängen zu Vereinzeln und anschließend kontrolliert dem Messkanalbereich zuzuführen. Dies geschieht vorzugsweise mittels entsprechenden Elektrodenanordnungen, so dass die Partikel mittels Dielektrophorese und der dadurch auf die Partikel einwirkenden Kräfte vereinzelt und in die entsprechende Partikelbahn gebracht werden.

Gemäß einer bevorzugten Ausbildung weisen die Elektrodeneinrichtungen zum Vereinzeln der Partikel Elektrodenanordnungen auf, die schräg zur Strömungsrichtung angeordnete erste Elektroden mit einer im wesentlichen trichterähnlichen Anordnung enthalten, und in Strömungsrichtung daran anschließende beabstandete parallele zweite Elektroden in einer ebenfalls trichterförmigen Anordnung mit einer Durchtrittsöffnung enthalten. Dabei werden die daran anschließenden parallelen zweiten Elektroden andauernd auf Potenzial gehalten, so dass ankommende Partikel aufgehalten und nur dann durch die Durchtrittsöffnung gelangen können, wenn sie einzeln hindurchtreten. Größere Cluster können nicht hindurch. Durch die Ausgestaltung stellt die Durchtrittsöffnung einen schmalen Schlitz in dem Kanal dar. Zur Trennung der vor der Durchtrittsöffnung befindlichen Cluster werden die ersten Elektroden gepulst, so dass aufgrund der dadurch auftretenden Kräfte die einzelnen Partikel versuchen, zu entweichen und sich dabei von den anderen Partikel lösen. Der Abstand zwischen den Elektroden beträgt vorzugsweise das zwei- bis vierfache des Partikeldurchmessers.

Im Anschluss daran findet eine Ausrichtung der Partikel in dem Fluidstrom statt, so dass die Partikel sich auf eine definierten Partikelbahn bewegen. Gemäß einer weiteren bevorzugten Ausführung schließt sich an die erste Elektrodenanordnung zum Vereinzeln direkt eine zweite Elektrodenanordnung zum Ausrichten der Partikel auf eine definierte Partikelbahn. Vorzugsweise wird die Elektrodenanordnung zum Vereinzeln gleich mit der Elektrodenanordnung zum Ausrichten kombiniert, in dem die vorstehend erwähnten zweiten parallele Elektroden mit der Durchtrittsöffnung verlängerte parallele Elektrodenarme im Abstand der Breite Durchtrittsöffnung (Spalt) aufweisen. Diese Elektrodenanordnung umfasst somit zwei im Abstand der Spaltbreite angeordnete obere Elektrodenarme und zwei zugehörige untere Elektrodenarme, wobei die jeweils die an einer zugeordneten oberen und unteren Elektroden ein Feld aufbauen. Durch die Anordnung von vier Elektrodenarmen werden die Partikel versuchen, den Gleichgewichtszustand genau in der Mitte zu finden. Hierzu ist erforderlich, dass die Länge der Elektrodenarme in Bezug auf die Durchflussgeschwindigkeit der Lösung ausreichend lang sind, damit der Gleichgewichtszustand erreicht werden kann. Die Breite der Durchtrittsöffnung bzw. der Abstand der Elektrodenarme ist geringfügig größer als die Partikel.

Diese derart vorbereiteten Partikel gelangen nun in den Messkanalbereich, der vorzugsweise einen Querschnitt aufweist, der nur geringfügig größer ist als die durchströmenden Partikel. Seine typische Kanalgröße kann 5 bis 10 µm betragen. Der Durchgang eines Partikels, insbesondere beispielsweise einer einzelnen Zelle, wird erfasst und identifiziert durch die Veränderung der elektrischen Impedanz, die, im Falle einer Zelle, zu den Eigenschaften der Zellgröße, Zellmembran und des Cytoplasmas in Bezug steht. Hinsichtlich der Messungen und der Anordnungen der Elektroden wird auf die vorstehend erwähnten Artikel von Gawad et al. verwiesen.

Gemäß einer anderen bevorzugten Ausführungsform wird ein breiterer Messkanal verwendet, was den Vorteil hat, dass die Gefahr einer Verstopfung reduziert wird. In diesem breiteren Messkanal werden die einzelnen Partikel mittels Dielektrophorese auf eine bestimmte Bahn auf einer Seite des Kanals gelenkt und durchtreten dann das Messfeld zwischen zwei Elektroden, wobei das Referenzfeld in dem Bereich angeordnet ist, in dem keine Partikel sich bewegen.

Die Abmessungen des Kanals liegen in der Größenordnung der zu messenden typischen Partikelgröße oder eine Größenordnung darüber. Die Elektroden können auf verschiedene Arten an den Wänden angeordnet werden, um wenigstens zwei Detektionsbereiche in dem gleichen Kanal vorzusehen. Die Elektroden können nacheinander an einer Seite des Kanals, den Kanal umkreisend, nur oben, oder oben und unten bzw. seitlich angeordnet sein. Wenn die Elektroden nacheinander nur an einer Seite des Kanals angeordnet sind, erfolgt eine starke Beeinflussung der Partikelposition während der Messung. Sofern die Position der Partikel genau bestimmt werden soll, ist es zweckmäßiger, die Messung durch eine Differenzmessung zwischen einem versetzten oberen und unteren Elektrodenpaar vorzunehmen. Das bewirkt, dass je nach vertikaler Ausrichtung des Partikels die oberen oder unteren Elektroden mehr oder weniger beeinflusst werden. Entsprechend kann dies an den seitlichen Wänden erfolgen.

Nachdem die einzelnen Partikel den Messkanalbereich durchlaufen haben, gelangen sie in den Sortierelektrodenbereich mit einem größeren Querschnitt. Damit eine ordnungsgemäße Sortierung möglich ist, befindet sich gemäß einer bevorzugten Ausführungsform vor der Sortierelektrodenanordnung eine Elektrodenanordnung zum Ausrichten der Partikel, um diese auf eine möglichst schmale Bahn im Fluidstrom zu leiten. Dies ermöglicht die exakte Aussortierung mit hoher Geschwindigkeit, da die entsprechende Elektroden eine geringe Elektrodenlänge aufweisen können und damit der Weg der aussortierten, aus der Partikelbahn ausgeleiteten Partikel entlang der Elektroden kurz ist und daher relativ schnell im Anschluss daran eine neue Auswahl getroffen werden kann.

Gemäß einer besonders bevorzugten Ausgestaltung der Erfindung weisen die Elektrodeneinrichtungen in dem Sortierbereich eine erste Sortierelektrodenanordnung und wenigstens eine zweite Sortierelektrodenanordnung auf, wobei die erste Sortierelektrodenanordnung in der Bahn der Partikel und die zweite Sortierelektrodenanordnung seitlich der Bahnen der Partikel angeordnet ist, um von der ersten Sortierelektrodenanordnung aussortierte Partikel gezielt weiterzuleiten. Vorzugsweise weist die zweite Sortierelektrodenanordnung einen Ausgang zum Passieren des Partikels auf, so dass die aussortierten Partikel sich auf einer zweiten Bahn, im wesentlichen parallel zu der ersten Partikelbahn bewegen. Im Anschluss daran, ist eine Gabelung in dem Kanal angeordnet, die den Fluidstrom entsprechend den Partikelbahnen teilt. Damit weist das Substrat einen Eingang und wenigstens zwei Ausgänge auf. Die Ausgänge können dann entsprechenden Aufnahmebehälter oder dgl. zugeführt werden.

Damit auch eine Observation und Detektion mittels optischen Verfahren möglich ist, ist es zweckmäßig, das Substrat transparent auszubilden.

Das Substrat gemäß der Erfindung erlaubt somit auf kleinstem Raum die Bestimmung von einzelnen Partikeln einer Vielzahl von durchlaufenden Partikeln in der Größenordnung von 100 oder mehr Partikeln pro Sekunde. Die Erfindung ermöglicht die Positionierung der Partikel, die Messung der Impedanz, die Geschwindigkeit oder die Position der strömenden Partikel in dem Messkanal und eine Durchfluss-Schaltanordnung in dem Sortierbereich, die es erlaubt, die Partikel in zwei oder mehrere Unterkanäle gemäß den zuvor bestimmten Kriterien in dem Messbereich zu leiten. Ein derartiges mikrotechnologisches hergestelltes Bauelement kann benutzt werden, um Zellen zu zählen, zu unterscheiden und entsprechend ihres Typus, ihrer Größe, ihrer Zellmembraneigenschaften, der Anwesenheit und/oder der Aktivität von spezifischen Membranrezeptoren zu sortieren. Im Rahmen der Sortierung ist somit auch das Identifizieren und Zählen von Partikeln möglich.

Gemäß dem Verfahren zum Sortieren von Partikeln in einem Fluidstrom durch ein mikrofluidisches Bauelement werden folgende Schritte durchgeführt:
A Vereinzelung der Partikel mittels Dielektrophorese und anschließender Positionierung der Partikel in der räumlichen Mitte des Fluidstromes,
B Charakterisieren der vereinzelten Partikel in einem engen Fluidstrom in einem Messkanalbereich durch Impedanzmessung,
C Sortieren der in dem Messkanalbereich erfassten Partikel aufgrund der in B ermittelten Kenngrößen mittels Dielektrophorese durch aktives Aussortieren von Partikeln aus der Partikelbahn und gezieltes Weiterleiten der aussortierten Partikel in einer zweiten Partikelbahn, die im wesentlichen parallel zu der ersten Partikelbahn verläuft,
D Trennen des Fluidstromes entsprechend den Partikelbahnen und
E gegebenenfalls Wiederholen der Schritte C. und D.

Sofern eine weitere Unterteilung und Sortierung erfolgen soll, werden die Schritte C und D entsprechend oft wiederholt.

Zur Erzeugung der elektrischen Felder werden vorzugsweise eine oder verschiedene Spannungen mit einer Frequenz von 1 kHz bis 200 MHz, zweckmäßigerweise mit Spitze-zu-Spitze-Spannungen von maximal 2 V verwendet.

Vorteilhafterweise werden vor dem Sortieren die Geschwindigkeit der Partikel optisch oder elektrisch gemessen.

Grundsätzlich ist es möglich, das Verfahren mittels auf dem Bauelement angeordneten und integrierten oder auch mit externen Einrichtungen zur Felderzeugung zu durchzuführen.

Zur weiteren Verdeutlichung der Erfindung wird nachfolgend diese in Verbindung mit den begleitenden Zeichnungen anhand von Ausführungsbeispielen näher erläutert. Es stellen dar:
- Figur 1: die Draufsicht auf ein Bauelement mit einer schematischen Andeutung eines Kanals mit den einzelnen Bereichen;
- Figur 2: verschiedene Ausführungsformen und Ansichten für Anordnungen zur Vereinzelung von Partikeln mit der Draufsicht auf eine ersten Anordnung (Figur 2a), der entsprechenden Schnittdarstellung in der Mitte des Kanals (Figur 2b), und die Draufsicht auf eine andere Elektrodenanordnung zur Vereinzelung (Figur 2c);
- Figur 3: die Elektrodenanordnung zum Positionieren der Partikel in dem Fluidstrom in der Draufsicht (Figur 3a) und der seitlichen Schnittdarstellung (Figur 3b);
- Figur 4: die Kombination einer Elektrodenanordnung gemäß den Figuren 2a und 3a in der Draufsicht;
- Figur 5: zwei verschiedene Elektrodenanordnungen für den Messkanalbereich einmal mit engem Messkanal (Figur 5a) und breiterem Kanal (Figur 5b);
- Figur 6: verschiedene Elektrodenanordnungen für die Ausrichtung und Sortierung in dem Sortierbereich mit einer ersten geometrischen Anordnung (Figur 6a), einer zweiten anderen geometrischen Anordnung (Figur 6b), eine dritten geometrischen Anordnung nur der Elektroden zum Ableiten der aussortierten Partikel (Figur 6c) und die Anordnung gemäß Figur 6a in vergrößerter Darstellung mit der Bahn der Partikel (Figur 6d).

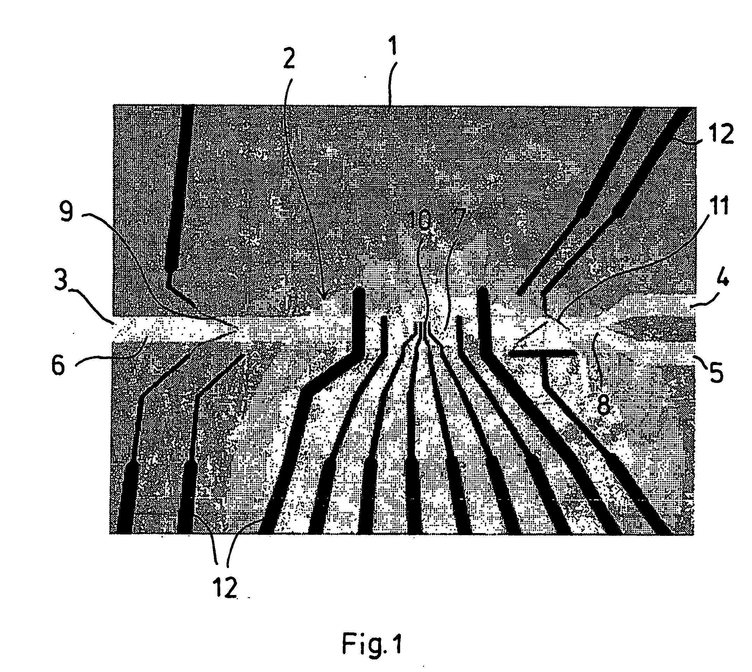

Aus der schematischen Ansicht in Figur 1 ist in der Draufsicht ein mikrofluidisches Bauelement 1 dargestellt, dass einen länglichen Kanal 2 zeigt, der auf der linken Seite einer Einlassöffnung 3 und auf der rechten Seite zwei Auslassöffnungen 4 und 5 aufweist. Selbstverständlich kann ein entsprechendes Bauelement 1, sofern erforderlich, auch mehrere Auslassöffnungen oder auch Einlassöffnungen aufweisen. Die Einlassöffnungen können an entsprechend geeignete Einrichtungen zum Zuführen eines Fluids das flüssig oder eventuell auch gasförmig sein kann, angeschlossen werden. Entsprechend sind auch die Auslassöffnungen 4 und 5 an entsprechende Einrichtungen zur Aufnahme der aussortierten Partikel angeschlossen. Im nachfolgenden wird im Zusammenhang mit den Ausführungsbeispielen von einer Flüssigkeit ausgegangen, die verschiedenartige Partikel, beispielsweise biologische Zellen, transportiert.

Der Kanal 2 unterteilt sich in einen Vorbereitungsbereich 6, einen Messkanalbereich 7 und einen Sortierbereich 8. Die Querschnitte der einzelnen Bereiche sind unterschiedlich, wobei insbesondere der Messkanalbereich 7 wesentlich schmäler ist als die beiden anderen Bereiche 6, 8. In den einzelnen Bereichen 6 bis 8 befinden sich schematisch angedeutete Elektrodenanordnungen 9 bis 11, die über zugeordnete Leiterbahnen 12 an eine externe und nicht dargestellte Steuer- und Messeinrichtung anschließbar sind. Die einzelnen Bereichen mit ihren Elektrodenanordnungen sind im Nachfolgenden in Verbindung mit den Figuren weiter erläutert.

Die Herstellung eines derartigen Bauelements kann beispielsweise in der Art erfolgen, dass auf einem Glassubstrat zuerst ein Lift-off-Resist zur Festlegung der Positionen der Elektronen photolithographisch aufgebracht wird. Nach dem Aufbringen einer Haftschicht, beispielsweise Titan, wird anschließend ein Edelmetall, beispielsweise Platin als Elektrodenmaterial sowie ein Leitermaterial, beispielsweise Kupfer für einen Anschluss der Elektroden niedergeschlagen. Nach dem Entfernen des Lift-off-Resists wird photolithographisch Polyimid als Kanalwände aufgebracht. Anschließend wird das Substrat mit einem deckungsgleichen zweiten Substrat zu einer Sandwich-Struktur mit eingeschlossenen Kanälen und Elektroden zusammengefügt. Die Dicke der Platinschicht kann dabei ungefähr 200 nm und die Dicke der Titanschicht ungefähr 50 nm betragen. Die Polyimidschicht beträgt 1 bis 20 µm.

Es ist auch möglich, als Substratmaterial ein anderes Material, beispielsweise Kunststoff zu verwenden, und Replikationsverfahren einzusetzen.

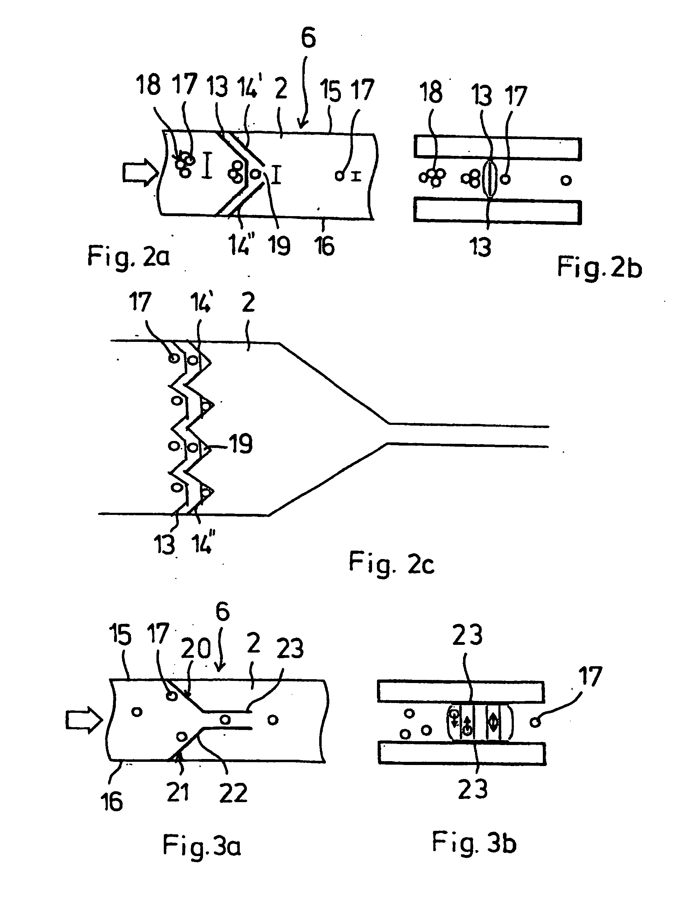

Figur 2 zeigt verschiedene Arten der Vereinzelung von Partikeln. In der Figur 2a ist die Draufsicht auf eine Elektrodenanordnung mit einer ersten Vereinzelungselektrode 13 und zweiten Vereinzelungselektroden 14' und 14" dargestellt. Beide Vereinzelungselektroden sind schräg zu den Wänden 15, 16 angeordnet und weisen dadurch eine trichterähnliche Form auf, die bewirkt, dass die in diesem Kanalbereich bewegenden Partikel 17 bzw. Partikel Cluster 18 auf Grund der Feldkräfte bewegt werden.

In den Draufsichten der nachfolgenden Figuren sind in der Regel nur die oberen Elektroden gezeigt. Wie vorstehend erwähnt, ist es für Beeinflussung der Partikel aufgrund von Dielektrophorese selbstverständlich, dass auch eine entsprechende untere Elektrode vorhanden ist, die mit der oberen Elektrode zusammenwirkt und damit das entsprechende elektrische Feld aufbaut, das die Beeinflussung der Partikel bewirkt.

Die Vereinzelungselektrode 13 kann selbstverständlich auch mit spitz zulaufenden schrägen Elektrodenteilen ausgebildet sein. Die Elektroden 14', 14" sind im wesentlichen parallel zu der ersten Vereinzelungselektrode 13 schräg zu den Wänden 15, 16 angeordnet. Im Unterschied zu der Vereinzelungselektrode 13 berühren sie sich am Ende nicht, sondern lassen eine Öffnung 19 für den Durchtritt der Partikel 17. Die Öffnung 19 entspricht dem durchschnittlichen Partikeldurchmesser oder ist geringfügig größer. Die Vereinzelungselektroden 14' und 14" sind permanent angeschaltet und stellen damit eine Barriere dar, die die Partikelcluster 18 aufhält. Die Elektrode 13 wird gepulst und bricht damit die Cluster auf. Dies ist beispielhaft in der Seitendarstellung gemäß Figur 2b gezeigt Sobald die Partikel 17 aus dem Partikelcluster 18 gelöst sind, können sie durch die Öffnung 19 hindurch.

Figur 2c zeigt eine andere Variante mit einer anderen Ausgestaltung mit mehreren nebeneinander angeordneten Vereinzelungselektroden 13 bzw. 14. Der Abstand zwischen den Vereinzelungselektroden 13 und den Vereinzelungselektroden 14 ist bei allen Ausführungsformen so gewählt, dass er größer ist als der Partikeldurchmesser, jedoch kleiner als die zu erwartende Partikelclustergröße.

Für die anschließende Ausrichtung der Partikel 17 in einer Bahn an einer gewünschten Position in dem Kanal 2 kann eine Elektrodenanordnung gemäß der Figur 3a verwendet werden. Diese zeigt die Draufsicht auf trichterförmige Positionierelektroden 20 und 21 mit jeweils einem schräg zur Wand 15 bzw. 16 verlaufenden Elektrodenarm 22 und parallelen Elektrodenarmen 23. Alle diese Elektroden sind eingeschaltet, wobei die Positionierelektrodenarme 22 bewirken, dass sich in dem Kanal bewegende Partikel 17 seitlich zur Mitte hin bewegen. Die Positionierelektrodenarme 23 bewirken die vertikale Positionierung der Partikel wie es in der Figur 3b gezeigt ist. Wichtig ist dabei, dass die Länge der parallelen Positionierelektrodenarme 23, denen, wie vorstehend erwähnt, entsprechende Elektroden auf der Unterseite des Kanals gegenüberstehen, lang genug sind, um den auf die Partikel einwirkende vertikalen Kräften zu erlauben, einen Gleichgewichtszustand zu finden, so dass die Höhe der Ausgangsbahn der Partikel 17 konstant und in diesem Fall in dem Kanal zentriert ist. Durch die unteren Elektroden geben sich insgesamt vier Elektroden und da die Kraft auf die Partikel 17 höher ist, wenn sie sich in den Elektroden nähern, tendieren sie dazu, bei einem symmetrischen Elektrodendesign sich im Zentrum zu zentrieren. Der Abstand der Elektroden sollte daher auch so gewählt sein, dass die Partikel durch beide elektrische Felder (Feld der Elektrodearme 22 und Feld der Elektrodenarme 23) beeinflusst wird. Der Abstand zwischen den Positionierelektrodenarmen 22 und 23 ist nur geringfügig größer als der Partikeldurchmesser.

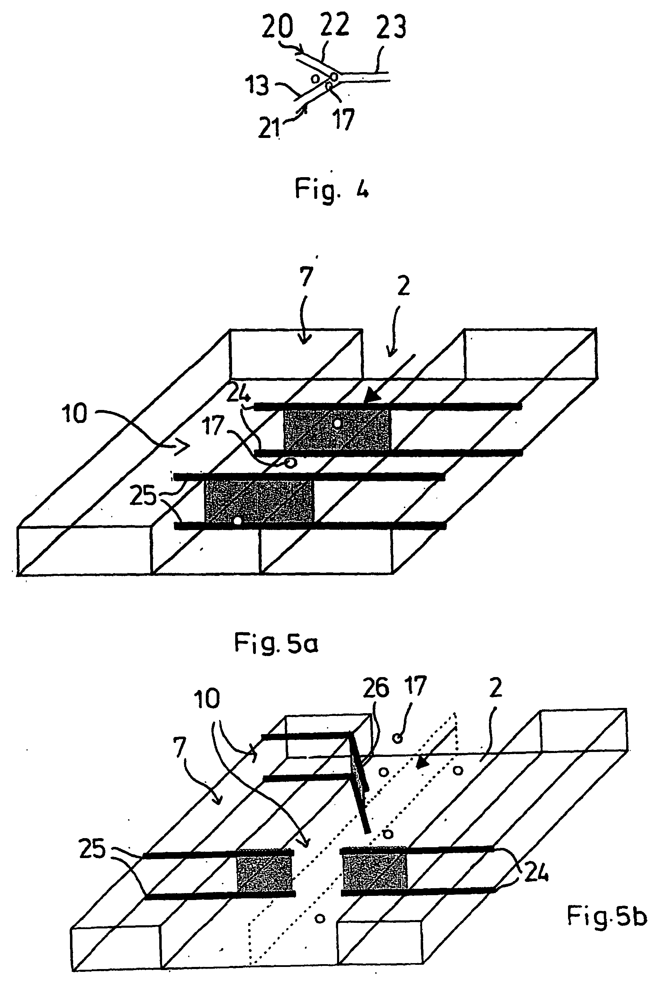

Figur 4 zeigt eine Elektrodenanordnung aus der Kombination der Elektroden gemäß Figur 3a und Figur 2a, wobei die gepulste Vereinzelungselektrode 13 in diesem Ausführungsbeispiel spitz zulaufend ausgestaltet ist. Der Abstand der schräg verlaufenden Elektrodenteile beträgt das 2 bis 4fache des Partikeldurchmessers.

Figur 5 zeigt ein Ausführungsbeispiel für den Kanal 2 im Messkanalbereich 7 mit einer entsprechenden Elektrodenanordnung 10. Die Elektrodenanordnung 10 umfasst in diesem Ausführungsbeispiel in bekannter Art und Weise zwei voneinander beabstandete Elektrodenpaare 24 und 25, die dazu dienen, zwischen ihnen ein elektrisches Feld aufzubauen. Die Flüssigkeit und die Partikel fließen durch den Kanal 2 des Messkanalbereichs 7. Für die meisten Fälle enthält eine Flüssigkeit einen Elektrolyt der eine von den Partikeln verschiedene Impedanz aufweist. Die Elektrodenpaare 24 und 25 sind an ein nicht dargestelltes elektrisches System angeschlossen, das die Spannung über die einzelnen Elektroden sowie den Strom durch die Bereiche misst, die durch die Messelektrodenpaare 24 und 25 gebildet werden. Jedes Mal, wenn ein Partikel den Bereich des ersten Messelektrodenpaares 24 passiert, ändern sich die vorstehend erwähnten elektrischen Parameter. Der Bereich des Messelektrodenpaares 25 bleibt unverändert und dient als Referenz. Entsprechend verhält es sich umgekehrt, wenn ein Partikel 17 das zweite Messelektrodenpaar 25 passiert.

Die Veränderung der elektrischen Parameter wird gleichzeitig gemessen bei mehreren Wechselstromfrequenzen, was eine bessere Differenzbildung und genauere Bestimmungen der Parameter ermöglicht. Die gemessenen Parameter werden von einer nicht dargestellten Steuer- bzw. Messeinrichtung dazu benutzt, um die nachfolgende Sortierung durchzuführen.

Figur 5b zeigt eine andere Ausgestaltung mit einem breiteren Kanal 2 in dem Messkanalbereich 7, wobei ein Ablenkelektrodenpaar 26 die ankommenden Partikel 17 auf eine bestimmte Partikelbahn lenkt, die durch das Messelektrodenpaar 24 hindurch führt. Das Messelektrodenpaar 25 ist in dem Bereich des Kanals angeordnet, in dem sich keine Partikel 17 befinden. Damit dient das Messelektrodenpaar 25 immer als Referenz. Diese Ausgestaltung hat den Vorteil, dass durch den größere Kanalbreite die Gefahr der Verstopfung reduziert ist. Die Messung kann trotzdem durch entsprechend kleine Ausgestaltungen der Elektroden wie in Figur 5a trotz vergrößerter Kanalbreite erfolgen. Die elektrischen Felder werden damit in Relation zu den Partikelgrößen konzentriert, d.h. der Einfluss eines großen Partikels auf das Feld ist größer als der Einfluss eines kleineren Partikels. Die Messungen werden daher genauer, wenn der Partikel eine möglichst große Fläche des Feldes überdeckt. Die zugehörige Messelektronik ist hier nicht dargestellt und auch nicht weiter erläutert (vergleiche hierzu vorstehend erwähnte Artikel von S. Gawad).

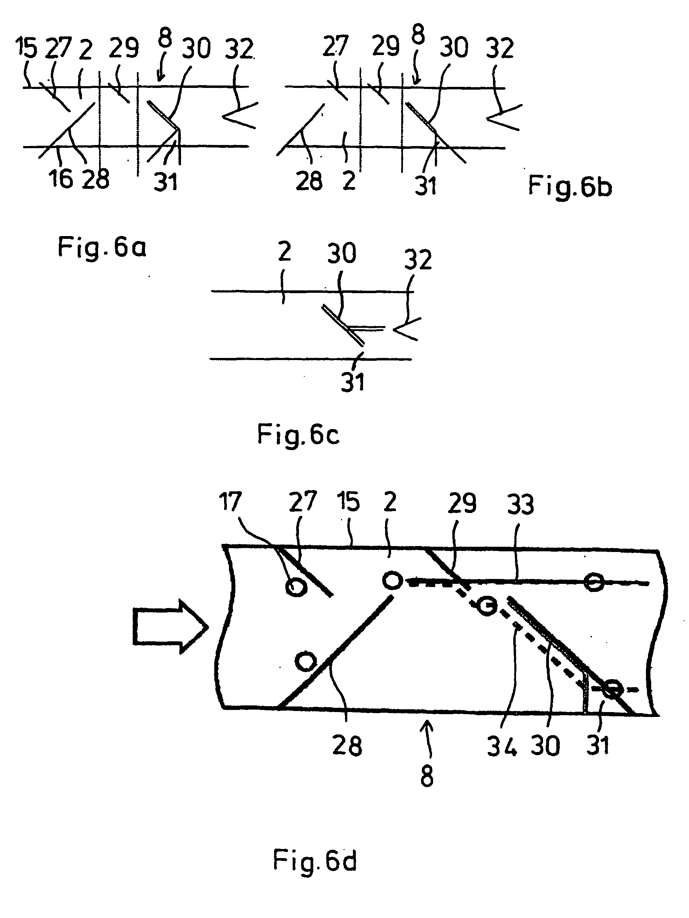

Figur 6 zeigt verschiedene Elektrodenanordnungen 11 in dem Sortierbereich 8. Diese Elektrodenanordnung erlaubt ein schnelles Sortieren der Partikel. Figur 6a zeigt zwei Ausrichtelektroden 27, 28, die die von dem Messkanal kommenden Partikel 17 in dem Ausführungsbeispiel in einem Bereich in der Nähe der einen Wand 15 des Kanals 2 bringt. Beide Ausrichtelektroden 27, 28 sind angeschaltet. Die Elektrode 29 ist die eigentliche Sortierelektrode, die, je nachdem, ob ein Partikel 17 auf der durch die Ausrichtelektroden 27 und 28 vorgegebenen Bahn bleiben soll, ausgeschaltet oder aber, wenn der Partikel 17 abgelenkt werden soll, eingeschaltet wird. Die Ableitelektrode 30 führt den abgeleiteten Partikel weg und erlaubt aufgrund einer Öffnung 31 den Austritt des Partikels, so dass durch die nachfolgende Gabelung 32 eine Trennung der Partikel 17 in Richtung der beiden Auslassöffnungen 4 und 5 gemäß Figur 1 möglich ist. Die Figur 6b zeigt eine andere alternative Anordnung der Ausrichtelektroden 27 und 28, wobei die Elektrode 27 kürzer als die nachfolgenden Sortierelektrode 29 ausgebildet ist und der Wegführung der Partikel 17 von der Wand 15 dient. Die Ableitelektrode 30 zeigt hier beispielhaft eine andere geometrische Anordnung, ohne das Ausgangsergebnis zu beeinflussen. In den Figuren 6a und 6b sind bei der Ableitelektrode beide, das heißt die obere als auch die untere Elektrode parallel dargestellt, um zu verdeutlichen, dass nur in dem Bereich, in dem die untere und die obere Ableitelektrode als parallel dargestellt sind, die gewünschte Führung eines Partikels 17 erfolgt. In dem übrigen Bereich entsteht die Öffnung 31 für den Durchtritt.

Figur 6c zeigt eine weitere mögliche Ausgestaltung des Ableitelektrodenpaares 30.

Anhand der Figur 6d wird der Sortiervorgang näher erläutert. Er zeigt zwei mögliche Bahnen für die Partikel 17. In bereits erwähnt, sind die Ausrichtelektroden 27, 28 und die Ableitelektroden 30 immer eingeschaltet. Das Sortierelektrodenpaar 29 wird dann aktiviert, wenn ein Partikel aussortiert werden soll. Dies bewirkt, dass der Partikel aus der an sich vorgesehenen Partikelbahn 33 abgelenkt und durch den Fluidstrom entlang der Partikelbahn 34 bewegt wird. Die Ableitelektroden 30 überlappen nicht auf der gesamten Strecke, so dass sie dadurch eine Öffnung 31 für die Partikel bilden, die dann auf eine im wesentlichen parallelen Bahn zu der Partikelbahn 33 sich weiter bewegen können. Um eine schnelle Aussortierung zu erreichen, ist es wichtig, dass die Länge der Sortierelektrode 29 möglichst gering ist, jedoch lang genug, dass im eingeschalteten Zustand der Partikel 17 seinen Weg zur Elektrode 30 fortsetzt und möglichst bald eine Ausschaltung des Sortierelektrodenpaares 29 für den nächsten Partikel erfolgen kann. Die Ableitelektrode 30 ist so angeordnet, dass Partikel, die nicht durch die Sortierelektrode 29 aussortiert werden, ihren Weg fortsetzen können, ohne zu stark durch die Ableitelektrode 30 beeinflusst zu werden.

Für die mittels Dielektrophorese gesteuerten Vorgänge werden Spannungen im Bereich von 10 V und Frequenzen von 100 kHz bis 10 MHz in Abhängigkeit der Flüssigkeit und der Partikel verwendet. Für die Messungen in dem Messkanal beträgt die Spannung unter 2 V und die Frequenzen betragen 10 kHz bis 200 MHz.

Mit dem vorstehend beschriebenen mikrofluidischen Bauelement ist eine integrierte schnelle und kostengünstige "On-Chip"-Erkennung mit anschließender Trennung möglich.

## Patentansprüche

1. Mikrofluidisches Bauelement aus einem Substrat mit
- mindestens einem Kanal (2) zum Durchführen individueller Partikel (17) in einem Fluid, wobei der Kanal (2) umfasst:
einen Vorbereitungsbereich (6) zur gezielten Beeinflussung und Vereinzelung der Partikel (17) mittels Dielektrophorese;
einen Messkanalbereich (7) mit Elektrodeneinrichtungen zur Charakterisierung der Partikel (17), die wenigstens zwei Abtastbereiche zur Messung der Impedanz in dem jeweiligen Bereich aufweisen; und
einen Sortierbereich (8) mit Elektrodeneinrichtungen zum Sortieren der in dem Messkanalbereich (7) identifizierten Partikel (17) mittels Dielektrophorese;
wobei der Querschnitt der Abtastbereiche in dem Messkanalbereich (7) geringer ist als der Querschnitt des Kanals (2) im Vorbereitungs- und im Sortierbereich (6 bzw. 8), und
- Leiterbahnen (12), die elektrisch mit den Elektroden (13, 14', 14", 20-30) in den einzelnen Bereichen (6-8) verbunden sind, um Signale zu den Elektroden bzw. Signale von den Elektroden zu übertragen.

2. Bauelement nach Anspruch 1, **dadurch gekennzeichnet, dass** in dem Vorbereitungsbereich (6) mittels Elektrodeneinrichtungen die Partikel (17) durch Dielektrophorese beeinflusst werden, wobei die ersten Elektrodeneinrichtungen Elektrodenanordnungen (9) aufweisen, die die Partikel (17) zuerst Vereinzeln und anschließend in einer bestimmten Position im Fluidstrom halten.

3. Bauelement nach Anspruch 2, **dadurch gekennzeichnet, dass** die Elektrodenanordnungen (9) zum Vereinzeln der Partikel (17) schräg zur Strömungsrichtung angeordnete erste Elektroden (13) mit einer im wesentlichen trichterähnliche Anordnung aufweisen, und in Strömungsrichtung daran anschließende beabstandete parallele zweite Elektroden (14', 14") in einer ebenfalls trichterförmigen Anordnung mit einer Durchtrittsöffnung (19) aufweist.

4. Bauelement nach Anspruch 2, **dadurch gekennzeichnet, dass** die Elektrodenanordnungen (9) zum Positionieren Elektroden (20, 21) aufweisen, die die Partikel (17) in der räumlichen Mitte des Fluidstromes halten.

5. Bauelement nach Anspruch 4, **dadurch gekennzeichnet, dass** die Elektrodenanordnungen (9) trichterförmig angeordnete Elektroden (20, 21) mit schräg zur Strömungsrichtung angeordnete und von den Wänden (15, 16) in den Kanal (2) ragende Elektrodenarmen (22), die eine zentrale Durchtrittsöffnung (19) bilden, und direkt daran anschließende, im Abstand der Durchtrittsöffnung (19) parallel verlaufende Elektrodenarme (23) aufweisen, wobei die ersten Elektrodenarme (22) der Ausrichtung der Partikel (17) in einer Ebene in der Mitte des Fluidstromes und die zweiten Elektrodenarme (23) der Ausrichtung der Partikel (17) entlang der Mittellinie des Fluidstromes dienen.

6. Bauelement nach Anspruch 5, **dadurch gekennzeichnet, dass** die zweiten Elektrodenarme (23) eine Länge aufweisen, die ausreichend ist, um den auf die Partikel (17) in dem Zwischenraum zwischen den Elektroden wirkenden Kräften ein Gleichgewichtszustand zu ermöglichen.

7. Bauelement nach einem der vorangegangenen Ansprüche, **dadurch gekennzeichnet, dass** der Abstand zwischen den Elektroden (13; 14', 14") das 2 bis 4fache des Partikeldurchmessers beträgt.

8. Bauelement nach einem der vorangegangenen Ansprüche 1 bis 7, **dadurch gekennzeichnet, dass** die Elektrodeneinrichtungen in dem Kanal (2) im Messkanalbereich (7) eine erste Elektrodenanordnung (26) zur Führung der Partikel (17) auf eine bestimmten Bahn in dem Messkanal und eine zweite Elektrodenanordnung zur Erzeugung von zwei Abtastbereichen (24, 25) zur Messung der Impedanz in dem jeweiligen Bereich aufweist, wobei der eine Abtastbereich (24) in der Bahn des zu messenden Partikels (17) und der andere Abtastbereich (25) außerhalb der Bahn zur Bereitstellung einer Referenzimpedanz angeordnet ist.

9. Bauelement nach einem der vorangegangenen Ansprüche, **dadurch gekennzeichnet, dass** die Elektrodeneinrichtungen in dem Sortierbereich (8) eine erste Sortierelektrodenanordnung (29) und wenigstens eine zweite Sortierelektrodenanordnung (30) aufweisen, wobei die erste Sortierelektrodenanordnung (29) in der Bahn (33) der Partikel (17) und die zweite Sortierelektrodenanordnung (30) seitlich der Bahn der Partikel angeordnet ist, um von der ersten Sortierelektrodenanordnung (29) aussortierte Partikel (17) gezielt weiter zu leiten.

10. Bauelement nach Anspruch 9, **dadurch gekennzeichnet, dass** die zweite Sortierelektrodenanordnung (30) schräg zur Strömungsrichtung angeordnet ist und einen Ausgang (31) zum Passieren des Partikels (17) aufweist.

11. Bauelement nach Anspruch 10, **dadurch gekennzeichnet, dass** nach der zweiten Sortierelektrodenanordnung (30) eine Gabelung (32) in dem Kanal (2) des Sortierbereichs (8) angeordnet ist.

12. Bauelement nach einem der Ansprüche 9 bis 11, **dadurch gekennzeichnet, dass** in dem Sortierbereich (8) in der Bahn der Partikel (17) vor der ersten Sortierelektrodenanordnung (29) eine Elektrodenanordnung (27, 28) zum Ausrichten der Partikel (17) angeordnet ist, die die vom Messkanal (2) aus dem Messkanalbereich (7) kommenden Partikel (17) auf eine möglichst schmale Bahn im Fluidstrom leitet, und die Elektroden der ersten Sortierelektrodenanordnung (29) schräg in der Bahn der Partikel angeordnet sind und eine Länge aufweisen, die im wesentlichen der Breite der Bahn entspricht.

13. Verfahren zum Sortieren von Partikel in einem Fluidstrom durch ein mikrofluidisches Bauelement, **gekennzeichnet durch**
A Vereinzeln der sich bewegenden Partikel (17) mittels Dielektrophorese und anschließender Positionierung der Partikel in der räumlichen Mitte des Fluidstromes,
B Charakterisieren der vereinzelten sich bewegenden Partikel in einem engen Fluidstrom in einem Messkanalbereich (7) **durch** Impedanzmessung, indem zwei oder mehr elektrische Felder (24, 25) in dem Messkanal erzeugt und **durch** Vergleich der Felder Informationen über die Größe und elektrischen Eigenschaften der Partikel ermittelt werden,
C Sortieren der in dem Messkanalbereich (7) aufgrund der in B ermittelten Kenngrößen erfassten sich bewegenden Partikel mittels Dielektrophorese **durch** aktives Aussortieren von Partikel aus der ersten Partikelbahn (33) und gezieltes Weiterleiten der aussortierten Partikel in einer zweiten Partikelbahn (34), die im wesentlichen parallel zu der ersten Partikelbahn (33) verläuft,
D Trennen der Partikelbahnen (33, 34) und
E gegebenenfalls Wiederholen der Schritte C. und D.

14. Verfahren nach Anspruch 13, **dadurch gekennzeichnet, dass** zur Erzeugung der elektrischen Felder eine oder verschiedenen Spannungen mit einer Frequenz von 1 kHz bis 200 MHz verwendet werden.

15. Verfahren nach Anspruch 13, **dadurch gekennzeichnet, dass** die Spitze-zu-Spitze-Spannungen maximal 2 V betragen.

16. Verfahren nach einem der vorangegangenen Ansprüche 13 bis 15, **dadurch gekennzeichnet, dass** vor dem Sortieren die Geschwindigkeit der Partikel optisch oder elektrisch gemessen wird.

17. Verfahren nach einem der vorangegangenen Ansprüche 13 bis 16, **dadurch gekennzeichnet, dass** vor dem Sortieren die Partikel auf eine Partikelbahn im Fluidstrom fokussiert werden.

18. Verfahren nach Anspruch 17, **dadurch gekennzeichnet, dass** anschließend Partikel durch Errichten oder Entfernen einer ersten elektrischen Feldbarriere (29) aus der Partikelbahn (33) herausgeführt und entlang einer weiteren Feldbarriere (30) auf eine zu der ersten Partikelbahn (33) im wesentlichen parallelen Partikelbahn (34) geleitet und anschließend der Fluidstrom entsprechend der beiden Partikelbahnen (33, 34) getrennt wird.

## Claims

1. A microfluidic component comprising a substrate having
- at least one channel (2) for leading through individual particles (17) in a fluid, the channel (2) comprising:
a preparation area (6) to specifically influence and separate the particles (17), by means of dielectrophoresis;
a measuring channel area (7) having electrode devices for **characterizing** the particles (17), said electrode devices have at least two sensing areas for measuring the impedance in the respective area; and
a sorting area (8) having electrode devices for sorting the particles (17) identified in the measuring channel area (7) by means of dielectrophoresis;
wherein the cross section of the sensing areas in the measuring channel area (7) is substantially smaller than the cross section in the preparation area and in the sorting area (6 and 8), and
- conductor tracks (12) which are electrically connected to the electrodes (13, 14', 14", 20-30) in the individual areas (6-8) in order to transmit signals to the electrodes and signals from the electrodes.

2. The component as claimed in claim 1 **characterized in that** the particles (17) are influenced by dielectrophoresis in the preparation area (6) by means of electrode devices, the first electrode devices having electrode arrangements (9) which first separate the particles (17) and then keep them in a specific position in the fluid flow.

3. The component as claimed in claim 2, charakterized in that the electrode arrangements (9) for separating the particles (17) have first electrodes (13) arranged obliquely with respect to the flow direction and having a substantially funnel-like arrangement and, following these in the flow direction, spaced-apart parallel second electrodes (14', 14") in a likewise funnel-like arrangement with a passage opening (19).

4. The component as claimed in claim 2, charakterized in that the electrode arrangements (9) for positioning have electrodes (20, 21) which keep the particles (17) at the physical center of the fluid flow.

5. The component as claimed in claim 4, charakterized in that the electrode arrangements (9) have electrodes (20, 21) arranged in a funnel shape with electrode arms (22) which are arranged obliquely with respect to the flow direction and project from the walls (15, 16) into the channel (2) and form a central passage opening (19) and, directly adjacent thereto, at a distance from the passage opening (19), have electrode arms (23) that run in parallel, the first electrode arms (22) serving to align the particles (17) in a plane in the center of the fluid flow, and the second electrode arms (23) to align the particles (17) along the center line of the fluid flow.

6. The component as claimed in claim 5, **characterized in that** the second electrode arms (23) have a length which is sufficient to permit the forces acting on the particles (17) in the interspace between the electrodes an equilibrium state.

7. The component as claimed in one of the preceding claims, **characterized in that** the distance between the electrodes (13; 14', 14") is two to four times the particle diameter.

8. The component as claimed in one of the preceding claims 1 to 7, **characterized in that** the electrode devices in the channel (2) in the measuring channel area (7) have a first electrode arrangement (26) for guiding the particles (17) on a specific path in the measuring channel, and a second electrode arrangement for producing two sensing areas (24, 25) for measuring the impedance in the respective area, one sensing area (24) being arranged in the path of the particle (17) to be measured, and the other sensing area (25) being arranged outside the path in order to provide a reference impedance.

9. The component as claimed in one of the preceding claims, **characterized in that** the electrode devices in the sorting area (8) have a first sorting electrode arrangement (29) and at least a second sorting electrode arrangement (30), the first sorting electrode arrangement (29) being arranged in the path (33) of the particles (17) and the second sorting electrode arrangement (30) being arranged at the side of the path of the particles in order specifically to lead particles (17) sorted out by the first sorting electrode arrangement (29) onward.

10. The component as claimed in claim 9, **characterized in that** the second sorting electrode arrangement (30) is arranged obliquely with respect to the flow direction and has an output (31) for the passage of the particle (17).

11. The component as claimed in claim 10, **characterized in that**, after the second sorting electrode arrangement (30), a fork (32) is arranged in the channel (2) of the sorting area (8).

12. The component as claimed in one of the claims 9 to 11, **characterized in that** the sorting area (8) in the path of the particles (17) upstream of the first sorting electrode arrangement (29) there is arranged an electrode arrangement (27, 28) for aligning the particles (17), which arrangement guides the particles (17) coming from the measuring channel (2) from the measuring channel area (7) onto the narrowest possible path in the fluid flow, and the electrodes of the first sorting electrode arrangement (29) are arranged obliquely in the path of the particles and have a length which substantially corresponds to the width of the path.

13. A method for sorting particles in a fluid flow by means of a microfluidic component, which comprises
A separating the particles (17) by means of dielectrophoresis and subsequently positioning the particles in the physical center of the fluid flow,
B **characterizing** the separated particles into a narrow fluid flow in a measuring channel area (7) by means of impedance measurement by generating two or more electric fields (24, 25) in the measuring channel and, by comparing the fields, information about the size and electrical characteristics of the particles is determined,
C sorting the particles registered in the measuring channel area (7) on the basis of the characteristics determined in B by means of dielectrophoresis by actively sorting particles out of the first particle path (33) and specifically leading the particles sorted out onward in a second particle path (34), which runs substantially parallel to the first particle path (33),
D dividing the particle paths (33, 34) and
E if necessary, repeating steps C and D.

14. The method as claimed in claim 13, **characterized in that** one or different voltages with a frequency from 1 kHz to 200 MHz are used to generate the electric fields.

15. The method as claimed in claim 13, **characterized in that** the peak-to-peak voltages are at most 2 V.

16. The method as claimed in one of the preceding claims 13 to 15, **characterized in that**, before sorting, the velocity of the particles is measured optically or electrically.

17. The method as claimed in one of the preceding claims 13 to 16, **characterized in that**, before sorting, the particles are focussed onto a particle path in the fluid flow.

18. The method as claimed in claim 17, **characterized in that** particles are subsequently led out of the particle path (33) by setting up or removing a first electric field barrier (29) and are led along a further field barrier (30) onto a particle path (34) substantially parallel to the first particle path (33), and the fluid flow is subsequently divided in accordance with the two particle paths (33, 34).

## Revendications

1. Composant microfluidique réalisé dans un substrat présentant
- au moins un canal (2) pour faire passer des particules individuelles (17) dans un fluide, le canal (2) comprenant :
une zone de préparation (6) pour influencer de façon spécifique et séparer les particules (17) par diélectrophorèse ;
une zone de mesure (7) avec des dispositifs à électrodes pour **caractériser** les particules (17) qui présentent au moins deux zones de détection pour la mesure de l'impédance dans la zone respective ; et
une zone de triage (8) avec des dispositifs à électrodes pour trier les particules (17) identifiées dans la zone de mesure (7) par diélectrophorèse,
la section des zones de détection dans la zone de mesure (7) étant inférieure à la section du canal (2) dans les zones de préparation et de triage (6 et 8), et
- des pistes conductrices (12) qui sont électriquement reliées aux électrodes (13, 14', 14'', 20-30) dans les différentes zones (6 à 8) pour transmettre des signaux vers les électrodes ou des signaux depuis les électrodes.

2. Composant selon la revendication 1, **caractérisé par le fait que** dans la zone de préparation (6) les particules (17) sont influencées par diélectrophorèse au moyen de dispositifs à électrodes, les premiers dispositifs à électrodes présentant des arrangements d'électrodes (9) qui séparent d'abord les particules (17) et les maintiennent ensuite dans une position définie dans le flux de fluide.

3. Composant selon la revendication 2, **caractérisé par le fait que** les arrangements d'électrodes (9) pour séparer les particules (17) présentent de premières électrodes (13) disposées en biais par rapport à la direction d'écoulement, essentiellement en forme d'entonnoir, suivies, à une certaine distance dans la direction d'écoulement, de deuxièmes électrodes (14', 14") parallèles aux premières, également en forme d'entonnoir avec une ouverture de passage (19).

4. Composant selon la revendication 2, **caractérisé par le fait que** les arrangements d'électrodes (9) présentent pour le positionnement des électrodes (20, 21) qui maintiennent les particules (17) au centre géométrique du flux de fluide.

5. Composant selon la revendication 4, **caractérisé par le fait que** les arrangements d'électrodes (9) présentent des électrodes (20, 21) en forme d'entonnoir, avec des bras d'électrodes (22) disposés en biais par rapport à la direction d'écoulement et faisant saillie des parois (15, 16) dans le canal (2) qui forment une ouverture de passage (19), directement suivis de bras d'électrodes (23) parallèles, espacés de l'ouverture de passage (19), les premiers bras d'électrodes (22) servant à l'alignement des particules (17) dans un plan au centre du flux de fluide et les deuxièmes bras d'électrodes (23) à l'alignement des particules (17) le long de la ligne centrale du flux de fluide.

6. Composant selon la revendication 5, **caractérisé par le fait que** les deuxièmes bras d'électrodes (23) présentent une longueur qui est suffisante pour permettre un état d'équilibre entre les forces agissant sur les particules (17) dans l'espace entre les électrodes.

7. Composant selon l'une des revendications précédentes, **caractérisé par le fait que** la distance entre les électrodes (13 ; 14', 14") vaut 2 à 4 fois le diamètre des particules.

8. Composant selon l'une des revendications précédentes 1 à 7, **caractérisé par le fait que** les dispositifs à électrodes du canal (2) dans la zone de mesure (7) présentent un premier arrangement d'électrodes (26) pour guider les particules (17) sur une certaine trajectoire dans le canal de mesure et un deuxième arrangement d'électrodes pour générer deux zones de détection (24, 25) pour la mesure de l'impédance dans la zone respective, l'une des zones de détection (24) étant disposée sur la trajectoire de la particule (17) à mesurer et l'autre zone de détection (25) étant disposée en dehors de la trajectoire pour fournir une impédance de référence.

9. Composant selon l'une des revendications précédentes, **caractérisé par le fait que les** dispositifs à électrodes dans la zone de triage (8) présentent un premier arrangement d'électrodes de triage (29) et au moins un deuxième arrangement d'électrodes de triage (30), le premier arrangement d'électrodes de triage (29) étant disposé sur la trajectoire (33) de la particule (17) et le deuxième arrangement d'électrodes de triage (30) étant disposé sur le côté de la trajectoire de la particule pour guider de manière sélective les particules (17) rejetées par le premier arrangement d'électrodes de triage (29).

10. Composant selon la revendication 9, **caractérisé par le fait que** le deuxième arrangement d'électrodes de triage (30) est disposé en biais par rapport à la direction d'écoulement et présente une sortie (31) pour laisser passer la particule (17).

11. Composant selon la revendication 10, **caractérisé par le fait que** le deuxième arrangement d'électrodes de triage (30) est suivi d'une bifurcation (32) dans le canal (2) de la zone de triage (8).

12. Composant selon l'une des revendications 9 à 11, **caractérisé par le fait que** dans la zone de triage (8), sur la trajectoire de la particule (17) avant le premier arrangement d'électrodes de triage (29), on dispose un arrangement d'électrodes (27, 28) pour l'alignement des particules (17), qui concentre les particules (17) arrivant de la zone de mesure (7) du canal de mesure (2) sur une trajectoire la plus étroite possible dans le flux de fluide, et que les électrodes du premier arrangement d'électrodes de triage (29) sont disposées en biais sur la trajectoire des particules et présentent une longueur qui correspond essentiellement à la largeur de la trajectoire.

13. Procédé pour le triage de particules dans un flux de fluide par un composant microfluidique, **caractérisé par**
A la séparation des particules (17) en mouvement par diélectrophorèse suivie d'un positionnement des particules au centre géométrique du flux de fluide,
B la caractérisation des particules séparées en mouvement dans un flux de fluide étroit dans une zone de mesure (7) par mesure d'impédance, en générant deux ou plus champs électriques (24, 25) dans le canal de mesure et, par comparaison des champs, en obtenant des informations sur la taille et les propriétés électriques des particules,
C le triage par diélectrophorèse des particules en mouvement mesurées dans la zone de mesure (7) sur la base des caractéristiques déterminées en B par rejet actif de particules de la première trajectoire de particules (33) et guidage sélectif des particules rejetées sur une deuxième trajectoire de particules (34) qui est essentiellement parallèle à la première trajectoire de particules (33),
D la division des trajectoires de particules (33,34) et
E la répétition, le cas échéant, des étapes C et D.

14. Procédé selon la revendication 13, **caractérisé par le fait que** l'on utilise une ou différentes tensions d'une fréquence de 1 kHz à 200 MHz pour générer les champs électriques.

15. Procédé selon la revendication 13, **caractérisé par le fait que** les tensions de crête à crête atteignent au maximum 2 V.

16. Procédé selon l'une des revendications précédentes 13 à 15, **caractérisé par le fait que** la vitesse des particules est mesurée optiquement ou électriquement avant le triage.

17. Procédé selon l'une des revendications précédentes 13 à 16, **caractérisé par le fait que** les particules sont focalisées sur une trajectoire de particules dans le flux de fluide avant le triage.

18. Procédé selon la revendication 17, **caractérisé par le fait que** des particules sont ensuite écartées de la trajectoire de particules (33) par création ou suppression d'une première barrière de champ électrique (29) et guidées le long d'une autre barrière de champ (30) sur une trajectoire de particules (34) essentiellement parallèle à la première trajectoire de particules (33) et que le flux de fluide est ensuite divisé suivant les deux trajectoires de particules (33, 34).
